**Europäisches Patentamt**

**European Patent Office**

**Office européen des brevets**

(19)

(11) Veröffentlichungsnummer: **0 020 807**
**A1**

(12)

# EUROPÄISCHE PATENTANMELDUNG

(21) Anmeldenummer: **79102191.8**

(22) Anmeldetag: **29.06.79**

(51) Int. Cl.³: **A 47 J 31/057**

(43) Veröffentlichungstag der Anmeldung: **07.01.81**
**Patentblatt 81/1**

(71) Anmelder: **ELPAG AG CHUR, Quaderstrasse 11,
CH-7001 Chur (CH)**

(72) Erfinder: **Bleckmann, Ingo, Dipl.-Ing. Dr. mont,
Ingnaz-Rieder-Kai 11, A-5020 Salzburg (AT)**

(84) Benannte Vertragsstaaten: **AT BE CH DE FR GB IT LU
NL SE**

(74) Vertreter: **Liedl, Gerhard et al, Steinsdorfstrasse 21-22,
D-8000 München 22 (DE)**

(54) **Vorrichtung zur Herstellung von Kaffee oder anderen Aufgussgetränken.**

(57) Bei einer Vorrichtung zur Herstellung von Kaffee oder anderen Aufgußgetränken ist zwischen einem Wasservorratsbehälter (8) und einem elektrisch beheizten Wasserdurchlaufkanal (2) eine den Wasserdurchfluß regelnde Einrichtung (3) vorgesehen, welche als Drossel ausgebildet ist und in der Weise wirkt, daß sie den Querschnitt des durchfließenden Wasserstromes so weit verkleinert, und die Durchflußgeschwindigkeit so stark erhöht, daß eine über die gesamte Wasserdurchlaufperiode im wesentlichen kontinuierliche Durchflußmenge pro Zeiteinheit erzielt wird und der Strömungsdruck in der Drossel höher liegt als der zum Austrieb des Wasser aus einem Steigrohr 7 benötigte Dampfdruck.

- 1 -

## Vorrichtung zur Herstellung von Kaffee oder anderen Aufgußgetränken

Die Erfindung betrifft eine Vorrichtung zur Herstellung von Kaffee oder anderen Aufgußgetränken, bei der zwischen einem Wasservorratsbehälter und einem elektrisch beheizten Wasserdurchlaufkanal eine Einrichtung vorgesehen ist, die den Wasserdurchfluß regelt und einen Dampfrückschlag in den Wasservorratsbehälter verhindert.

Bei bekannten Vorrichtungen der in Rede stehenden Art besteht die Einrichtung, die den Wasserdurchfluß regelt und einen Dampfrückschlag in den Wasservorratsbehälter verhindert, aus einem Ventil mit einem beweglichen Teil, im allgemeinen mit einer Ventilkugel. Die Arbeitsweise der so ausgebildeten "Kaffeemaschine" ist zwangsläufig diskontinuierlich. Wenn der Wasservorratsbehälter gefüllt wird, läuft Wasser durch das Kugelventil über eine Zuleitung in ein elektrisch beheiztes Wasserdurchflußrohr und von dort in ein Steigrohr. Der Auslauf des Steigrohres, welcher beispielsweise über einem Kaffeefilter liegt, ist etwas höher angeordnet als der maximale Wasserpegel im Wasservorratsbehälter, so daß also der Zufluß aufhört, wenn der Wasserpegel im Steigrohr dieselbe Höhe erreicht hat wie im Wasservorratsbehälter. Durch die elektrische

E 82

Beheizung des Wasserdurchlaufkanals wird in diesem Bereich das Wasser bis nahe an den Siedepunkt erhitzt, wobei die äußeren Randschichten der im Wasserdurchlaufkanal stehenden Flüssigkeitssäule in Dampf verwandelt werden. Die auf den Dampf zurückzuführende Volumenvergrößerung führt nun zu einem Steigen der Flüssigkeitssäule im Steigrohr und in dem an den Wasservorratsbehälter angeschlossenen Zulauf. Der Wasserrückstrom in den Wasservorratsbehälter bewirkt das Schließen des Kugelventils, so daß sich die weitere Volumenvergrößerung zwangsläufig im Steigrohr auswirken muß. Es tritt nun zuerst heißes Wasser und später Wasser vermischt mit Dampf aus dem Auslauf des Steigrohres aus. Wenn ein Großteil der Wassersäule aus dem Steigrohr und aus dem Wasserdurchlaufkanal ausgetrieben ist, bricht der Druck im Wasserdurchlaufkanal zusammen, da der Dampf nunmehr über das Steigrohr im wesentlichen frei austreten kann. Wenn der Druck unter den Druck abfällt, welcher von der im Wasservorratsbehälter stehenden Flüssigkeitssäule ausgeübt wird, öffnet das Kugelventil, so daß ein neuer Wasserschub nachfließen kann. Das in den Wasserdurchlaufkanal fließende kalte Wasser führt zu einer Abkühlung und zu einer Absorption des Dampfes, so daß der Wasserdurchlaufkanal und das Steigrohr fast wieder vollständig mit Wasser gefüllt werden. Der Vorgang wiederholt sich nun in den gleichen Perioden.

Diese Betriebsweise hat einige erhebliche Nachteile:

Es wird ein nicht unerheblicher Teil des in den Wasservorratsbehälter eingefüllten Wassers in Dampf verwandelt. Der Dampf tritt nutzlos aus der Auslauföffnung des Steigrohres aus. Geht man davon aus, daß etwa 1/6 des Wassers in Dampf verwandelt wird, so ergibt sich ein Energiemehraufwand von über 30 %, da ja der Was-

E 82

seranteil zuerst auf den Siedepunkt erhitzt und dann in Dampf umgewandelt werden muß.

Der aus der Auslauföffnung des Steigrohres austretende Dampf erzeugt ein unangenehmes schnorchelndes Geräusch.

Da die Ventileinrichtung zwangsläufig bewegliche Teile enthalten muß, erhöht sich die Störanfälligkeit der Vorrichtung, sei es durch Stöße oder Herabfallen oder sei es z.B. durch Verschmutzungen infolge von Fehlbedienungen.

Aufgrund der diskontinuierlichen Arbeitsweise kann keine optimale Auslauftemperatur des Wassers erzielt werden. Eine solche ist jedoch gerade bei der Zubereitung von Kaffee von besonderer Bedeutung.

Da Vorrichtungen der in Rede stehenden Art Massenartikel sind, spielen auch die Kosten für das Kugelventil eine nicht unerhebliche Rolle.

Der Erfindung liegt nun die Aufgabe zugrunde, eine Vorrichtung der in Rede stehenden Art vorzuschlagen, bei der die oben geschilderten Nachteile behoben werden. Insbesondere sollen bewegliche Teile im Wasserdurchlaufkanal vermieden und eine optimale Auslauftemperatur erzielt werden.

Zur Lösung dieser Aufgabe wird auf den beiliegenden Anspruch 1 verwiesen, wobei in den Unteransprüchen vorteilhafte Weiterbildungen angegeben sind. Die Erfindung besteht im wesentlichen darin, daß die den Wasserdurchfluß regelnde und einen Dampf-

E 82

rückschlag in den Wasservorratsbehälter verhindernde Einrichtung als Drossel ausgebildet ist, die einen im wesentlichen kontinuierlichen Wasserstrom durchläßt.

Der physikalische Funktionsmechanismus der neuartigen Ausbildung ist noch nicht vollständig aufgeklärt. Der Durchlaßquerschnitt der Drossel ist ziemlich kritisch, wie dies später noch erläutert wird. Einerseits muß die Drossel so eng gehalten werden, daß die erhöhte Strömungsgeschwindigkeit des Wassers im Bereich der Drossel ausreicht, um Dampfrückschläge in den Wasservorratsbehälter zu verhindern, andererseits muß sichergestellt sein, daß in Abstimmung auf die Heizleistung des Heizkörpers soviel Wasser nachströmt, wie zu einem kontinuierlichen Durchlauf mit Erhitzung auf fast $100^{\circ}$ C benötigt wird. Die besten Ergebnisse wurden bei einer Vorrichtung der in Rede stehenden Art mit einem Durchmesses des Wasserrohres von 10 mm und einer Heizleistung von 650 Watt erzielt, wenn die Drossel oder Blende einen Durchmesser von 2 mm hatte, d.h. also wenn der Durchflußquerschnitt auf 1 - 2 % des Querschnittes des Wasserrohres verringert wird. Dabei ergibt sich eine Auslauftemperatur zu Beginn des Brühvorganges von $95^{\circ}$ C. Nach 2 - 3 Minuten wird die maximale Auslauftemperatur von $98^{\circ}$ C erreicht, wobei zu bemerken ist, daß die Versuche in einer Höhe von etwa 700 m ü.d.M. vorgenommen wurden, wo also höhere Temperaturen als $98^{\circ}$ C nicht erwartet werden können.

Da die Drossel oder Blende an der Einlaufseite des Wasserrohres angeordnet ist, sie dementsprechend also nur vom kalten Wasser beaufschlagt wird, kann sie auch nicht verkalken. Die Blende verzögert den Wassernachfluß aus dem Wasservorratsgefäß auf einen

E 82

Wert, welcher ungefähr dem Durchschnittswert des Wasserauslaufes entspricht. Damit ergibt sich eine längere Verweilzeit der Wassersäule in dem erhitzten Wasserdurchlaufrohr oder, anders ausgedrückt, die Drossel bewirkt, daß genausoviel kaltes Wasser nachgeführt wird, wie auch die optimale Brühtemperatur erhitzt werden kann. Eine zentrale Anordnung der verengten Durchflußöffnung, sei es in reisrunder Ausführung oder auch in Schlitzform, Kreuzform oder anderen Ausführungen, liefert anscheindend einen neuen Effekt. Das kalte Wasser wird in einem gleichmäßigen Strom, also nicht wie bei bekannten Ausführungsformen in Intervallen, in das Zentrum der bereits erhitzten Wassersäule eingeführt. Die die Flüssigkeitssäule in das Steigrohr hochtreibende Dampfentwicklung beginnt jedoch an der Peripherie der Wassersäule, so daß dementsprechend zuerst die ringförmige Außenschicht der Wassersäule vorgetrieben wird. Der Kaltwasserkern wandert also unter zunehmender Erhitzung mit dem Vorwärtsrieb radial nach außen.

Ferner läßt sich durch die im Anspruch 6 angegebene Verstellmöglichkeit eine Aromawahl treffen.

Die beiliegenden Zeichnungen, welche Ausführungsbeispiele darstellen, dienen der weiteren Erläuterung der Erfindung. Es zeigen:

Fig. 1     eine Kaffeemaschine in Seitenansicht;

Fig. 2     die Unterseite der in Fig. 1 dargestellten Kaffeemaschine;

E 82

- 6 -

0020807

Fig. 3,          Blenden mit unterschiedlichen Blendenöffnungen;
4 u. 5

Fig. 6          eine Kaffeemaschine mit eingebautem Aromawähler;

Fig. 7          ein Diagramm einer Vorrichtung gemäß der Erfindung
ohne Rückschlagventil bei einem bevorzugten Blendendurchmesser von 2 mm in Abhängigkeit verschiedener
Heizleistungen;

Fig. 8          Diagramme ähnlich Fig. 1 bei Blendendurchmessern
bis 10          von 2,5 bzw. 3,0 bzw. 3,5 mm;

Fig. 11         Diagramme bei einem Blendendurchmesser von 4 bzw.
und 12          5 mm, wobei jedoch bereits ein Rückschlagventil erforderlich wurde, und

Fig. 13         ein Vergleichsdiagramm einer üblichen Vorrichtung
der in Rede stehenden Art.

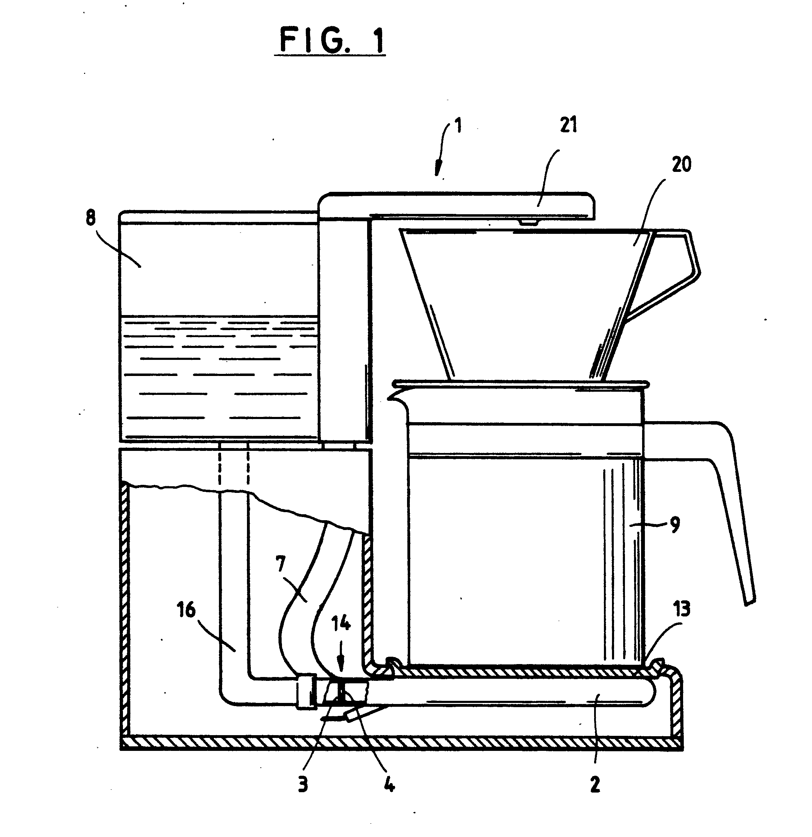

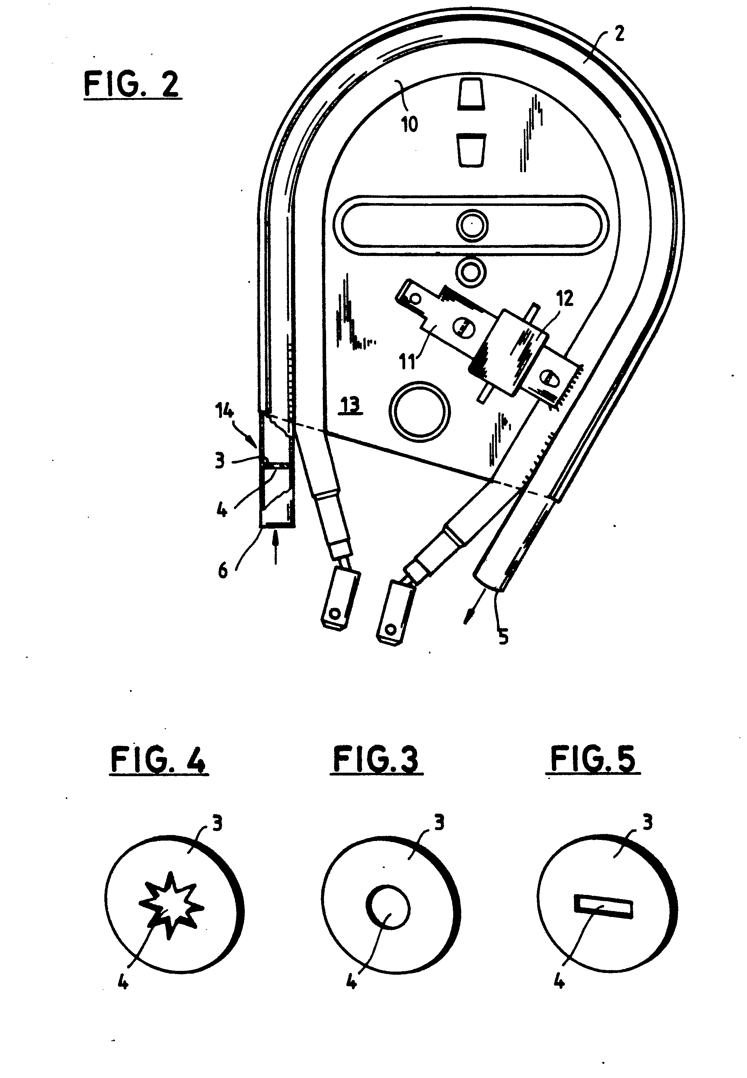

Die in den Fig. 1, 3 und 6 dargestellten Kaffeemaschinen besitzen
einen Behälter 9 zur Aufnahme des fertiggestellten Aufgußgetränks,
beispielsweise Kaffee, der auf einer Grundplatte 13 aufgestellt werden kann. Die Grundplatte 13 ist an der Unterseite, wie aus Fig. 2
zu ersehen ist, mit einem Durchlauferhitzer versehen, der einen
elektrischen Rohrheizkörper 10 und ein Durchlaufrohr/2 aufweist. Der
Rohrheizkörper 10 und das Wasserdurchlaufrohr 2 stehen in wärmeleitender Verbindung. Außerdem ist an der Unterseite der Grundplatte 13 eine mit dem Wasserdurchlaufrohr 2 und dem Rohrheizkörper 10 wärmeleitend verbundene Brücke 11 angeordnet, die zur Auf-

E 82

nahme eines Thermostaten 12 dient. Dieser Thermostat unterbricht die Stromzufuhr zum Rohrheizkörper 5, sobald das Wasser, welches in einem Vorratsbehälter 8 vorhanden ist, verbraucht ist.

Der Vorratsbehälter 8 für das Wasser steht über eine Zulaufleitung 16 mit der Eingangsseite 6 des Wasserdurchlaufrohres 2 in Verbindung. Die Auslaßseite 5 des Wasserdurchlaufrohres ist an ein Steigrohr 7 angeschlossen, durch das das erhitzte Wasser in einen, beispielsweise über einem Kaffeefilter 20 angeordneten Auslauf 21 einmündet.

Beim Ausführungsbeispiel der Fig. 1 und 2 ist an der Eingangsseite 6 des Wasserdurchlaufrohres 2 eine Blende 3 mit einer zentralen Öffnung 4 angeordnet, welche als wasserdurchflußregelnde Einrichtung bzw. Drossel 14 wirkt.

Wie in den Fig. 3, 4 und 5 dargestellt ist, kann die zentrale Öffnung 4 der Blende 3 kreisförmig (Fig. 3), sternförmig (Fig. 4) oder auch schlitzförmig (Fig. 5) ausgebildet sein.

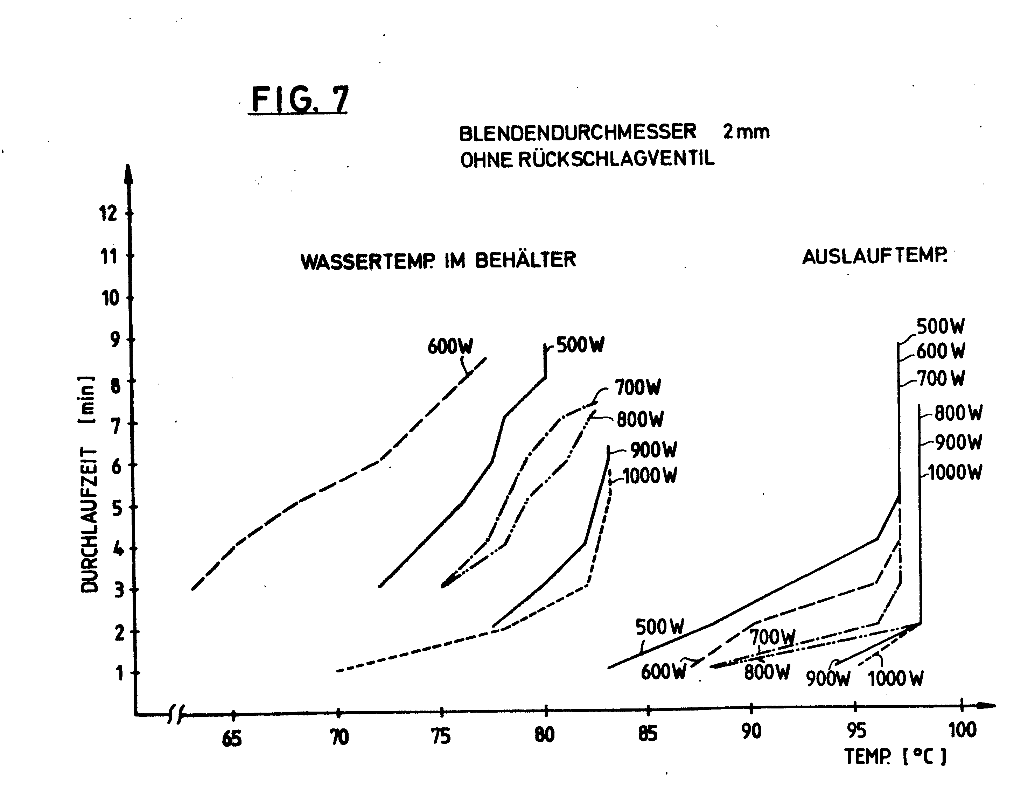

Bei der Versuchsanordnung für die Fig. 7 bis 10 wurde auf der Eingangsseite 6 des Wasserdurchlaufrohres 2 des Durchlauferhitzers für die Kaffeemaschine 1 die Blende 3 eingesetzt, welche eine zentrale kreisförmige Bohrung 4 mit einem Durchmesser von 2 mm hatte. Das sonst üblicherweise verwendete Rückschlagventil wurde weggelassen.

Es wurde einerseits die Auslauftemperatur des erhitzten Wassers unmittelbar an der Auslauföffnung eines an das Steigrohr 7 angeschlossenen Hebels und andererseits die Wassertemperatur in dem zur Aufnahme des fertiggestellten Aufgußgetränkes bestimmten Behälter 9

E 82

gemessen, und zwar in Abhängigkeit von verschiedenen Heizleistungen des elektrischen Heizkörpers 10.

Aus Fig. 7 ist ersichtlich, daß bei den Heizleistungen 800, 900 und 1000 W die ideale Auslauftemperatur von 98° C erreicht wird, wobei zu bemerken ist, daß entsprechend dem bestehenden Luftdruck eine höhere Temperatur theoretisch auch nicht möglich ist. Diese ideale Auslauftemperatur von 98° C wurde dabei in allen Fällen bereits zwei Minuten nach Einschalten des elektrischen Heizkörpers erreicht. Es ergeben sich lediglich Unterschiede in der Anheizperiode und in der Gesamtdurchlaufzeit. Die gesamte Wassermenge, welche die Vorrichtung aufnehmen konnte, war bei einer Heizleistung von 1000 W bereits nach 5, 7 Minuten durchgelaufen. Bei einer Heizleistung von 900 W wurden hierzu 6, 3 Minuten und bei einer Heizleistung von 800 W 7, 3 Minuten benötigt.

Bei Heizleistungen zwischen 500 und 700 W ist die Auslauftemperatur im Vergleich zu üblichen Kaffeemaschinen immer noch relativ sehr hoch, d. h. sie beträgt 96, 5° C. Diese Endtemperatur wird bei einer Heizleistung von 700 W nach 3 Minuten, bei einer Heizleistung von 600 W nach 4 Minuten und bei einer Heizleistung von 500 W nach 5 Minuten erreicht. Die für den Durchlauf der gesamten Wassermenge benötigte Zeit erhöht sich bei 700 W auf 7, 3 Minuten, bei 600 W auf 8, 5 Minuten und bei 500 W auf 8, 8 Minuten.

Durch den kontinuierlichen gleichmäßigen Ausfluß des Wassers mit hoher Temperatur werden auch entsprechend hohe Wassertemperaturen in dem zur Aufnahme des Aufgußgetränkes bestimmten Behälter erreicht. Wenn dieselbe Vorrichtung im Originalzustand, d. h. mit Rückschlagventil und ohne Blende betrieben wird, ergibt sich bei einer Heizleistung von 1000 W nach der zweiten Minute eine Wassertempe-

E 82

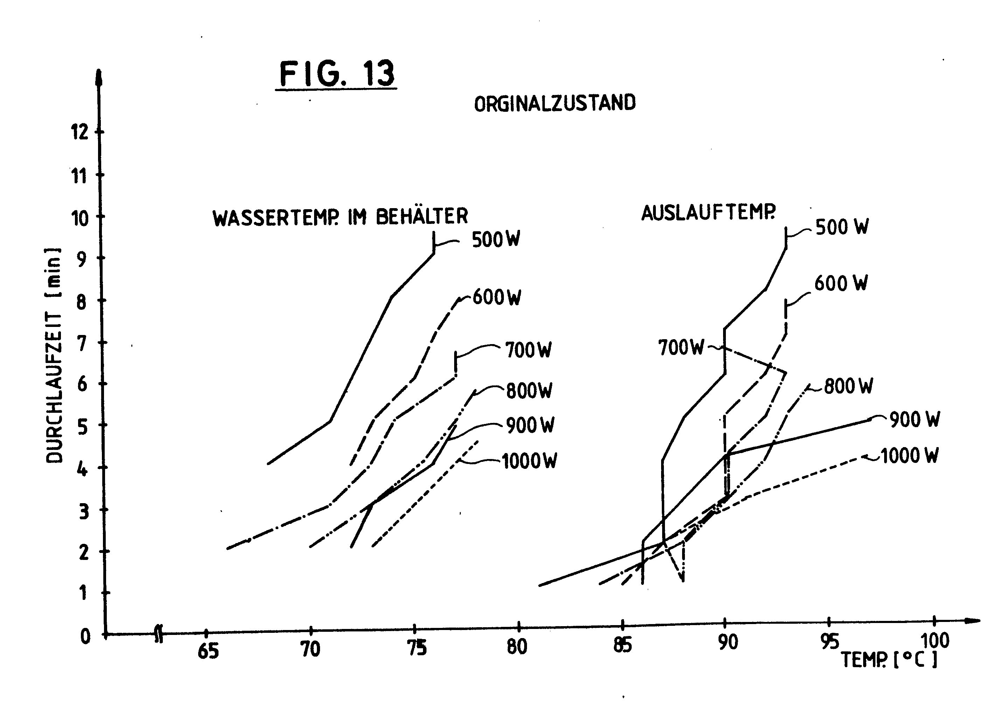

ratur von 73° C, wobei auf das Vergleichsdiagramm gemäß Fig. 13 Bezug genommen wird. Bei der neuartigen Ausbildung liegt die Wassertemperatur bei einer Heizleistung von 1000 W nach der zweiten Minute im Behälter bereits bei 78° C. Im Originalzustand wird bei einer Heizleistung von 1000 W nach 4 1/2 Minuten die maximale Temperatur im Wasserbehälter von 78° C erreicht. Dagegen liegt bei der neuen Ausbildung die maximale Wassertemperatur bereits nach der dritten Minute bei 82° C. Bei sämtlichen über 600 W liegenden Heizleistungen wurden bei der neuartigen Ausbildung Temperaturen von 80° C und darüber erreicht, während bei der Vorrichtung im Originalzustand 78° C nicht überschritten wurden.

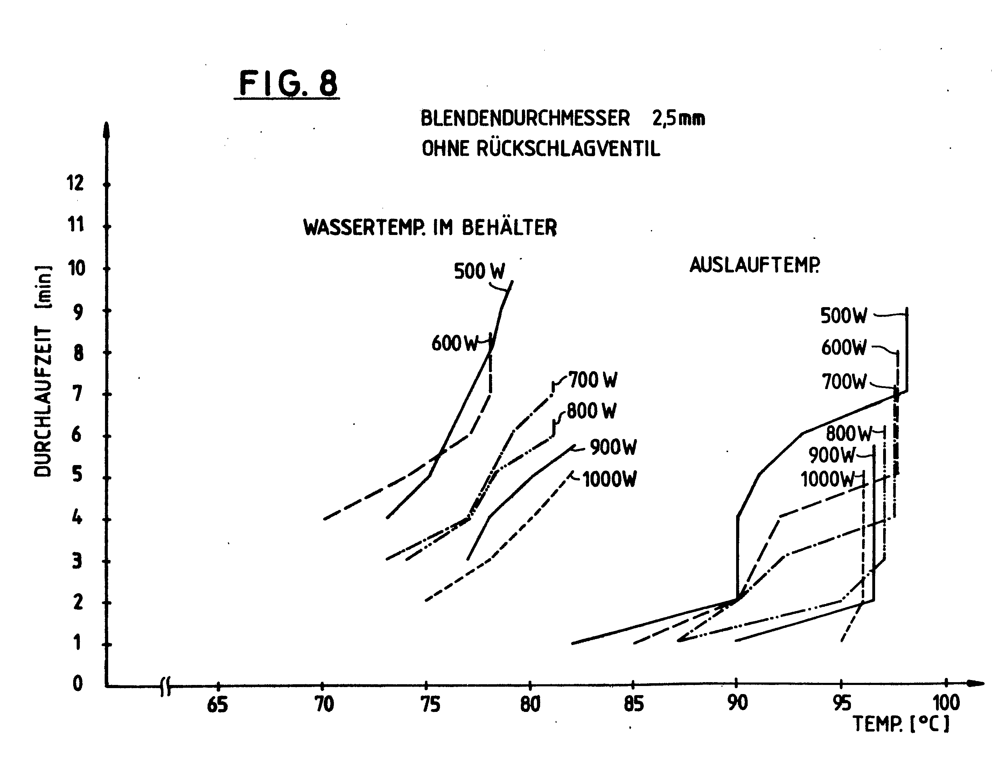

Aus Fig. 8 ist zu entnehmen, daß die Größe der Blende sehr kritisch ist und sich auf die Auslauftemperaturen stark auswirkt. Die Versuchsanordnung war dieselbe wie bei Fig. 7, jedoch mit der Ausnahme, daß der Durchmesser des zentralen Loches in der Blende diesmal 2,5 mm betrug.

Eigenartigerweise werden nun bei den hohen Heizleistungen von 800, 900 bzw. 1100 W nicht mehr die maximalen Auslauftemperaturen erreicht - obwohl die Werte selbstverständlich immer noch weit besser liegen als bei der Vorrichtung im Originalzustand, d. h. ohne Blende und mit Rückschlagventil -, wozu wiederum auf Fig. 13 Bezug genommen wird. Aus dem Diagramm ist ersichtlich, daß bei diesem Blendendurchmesser Heizleistungen zwischen 700 und 800 W einen guten Kompromiß zwischen der erreichbaren Auslauftemperatur und der Gesamtdurchlaufzeit darstellen. Bei der Zubereitung von Kaffee kann jedoch auch eine Heizleistung von 500 W Vorteile bieten. Die Auslauftemperatur steigt im Vergleich zu den höheren Heizleistungen langsamer an. Da die Löslichkeit von Coffein, Geschmacksstoffen und

E 82

Bitterstoffen im Kaffee einerseits stark von der Brühtemperatur und andererseits von der zum Quellen des Kaffees benötigten Zeit abhängig ist, ergibt sich bei der Heizleistung von 500 W eine sehr gute Ausbeute. Es muß jedoch eine etwas längere Durchlaufzeit in Kauf genommen werden. Das Diagramm zeigt also, daß man durch Wahl des Blendendurchmessers in Abstimmung zur Heizleistung jeweils zu optimalen Charakteristiken, je nach dem Verwendungszweck, für welchen die Vorrichtung bestimmt ist, gelangen kann. Wenn Kaffeemaschinen, die gleichzeitig die Herstellung von zwei Aufgußgetränken ermöglichen, entsprechend der Erfindung ausgebildet werden, dann können für die beiden Seiten unterschiedliche Charakteristiken gewählt werden, beispielsweise eine Seite für schnellen Durchlauf mit hoher Heizleistung und die andere Seite für langsameren Durchlauf mit geringerer Heizleistung. Selbstverständlich kann auch eine Regelung der Heizleistung in Betracht gezogen werden.

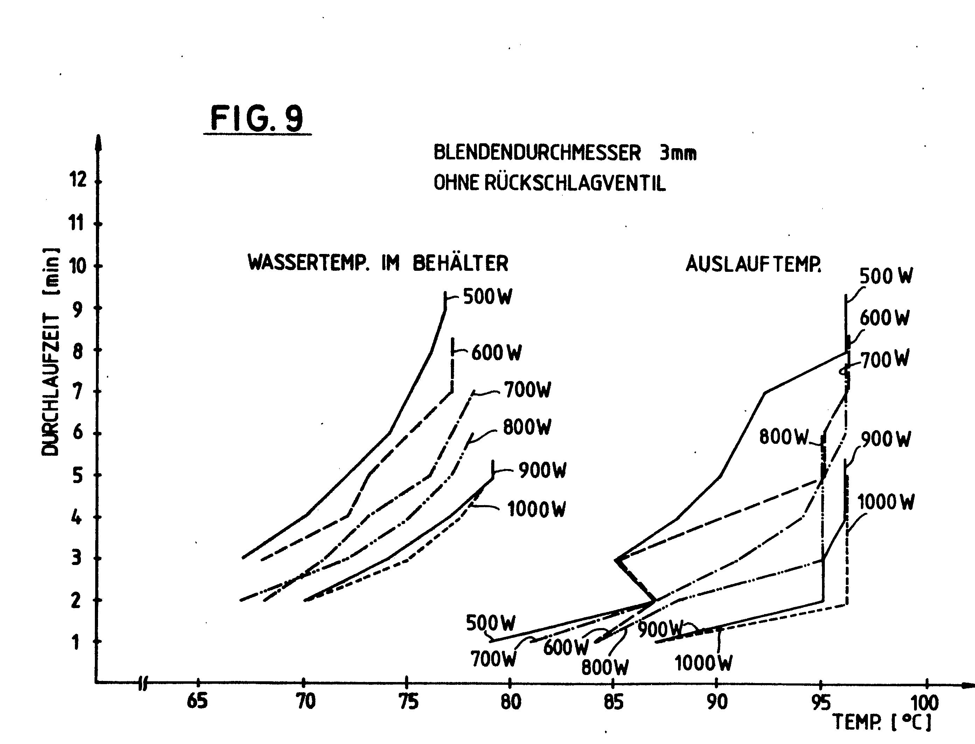

Fig. 9 zeigt ein Diagramm mit derselben Vorrichtung, wobei jedoch der Durchmesser der Blendenöffnung mit 3,0 mm gewählt wurde. Obgleich auch diese Vorrichtung noch ohne Rückschlagventil arbeiten kann, ist ersichtlich, daß bei den Heizleistungen 500 und 600 W die Maschine zwischen der zweiten und dritten Minute in eine diskontinuierliche Arbeitsweise übergegangen ist. In dieser Zeitperiode fällt die Auslauftemperatur ab. Der Blendendurchmesser ist dementsprechend lediglich für die höheren Heizleistungen geeignet. Es wird jedoch bei sämtlichen Heizleistungen eine maximale Auslauftemperatur von 96$^o$C nicht mehr überschritten.

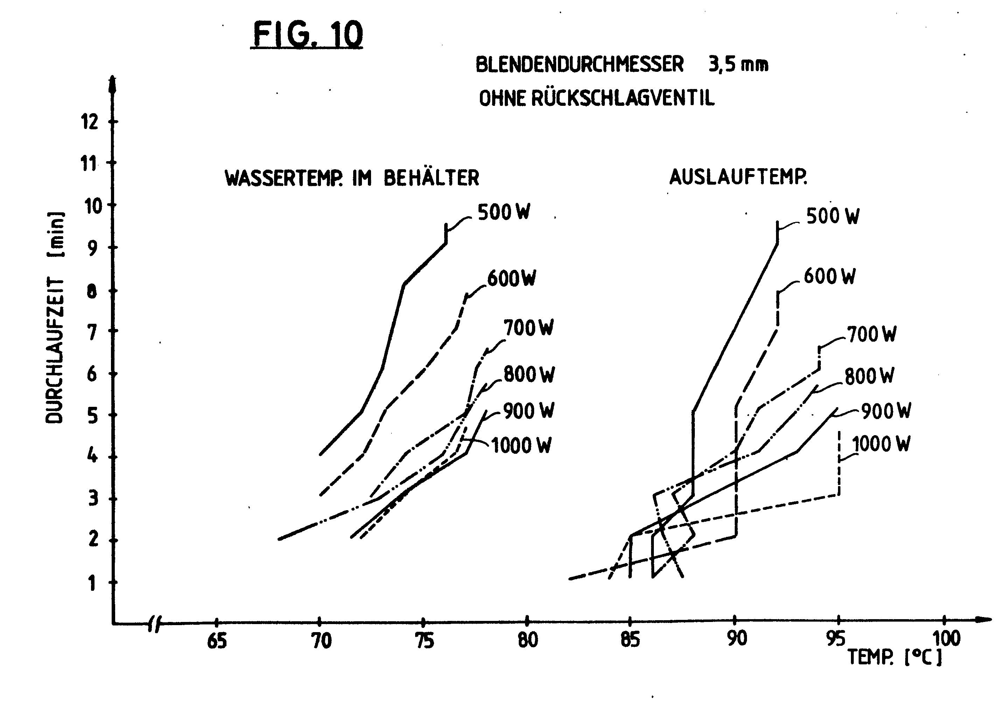

Aus Fig. 10 ist ersichtlich, daß bei einem Durchmesser der Blende von 3,5 mm nur mehr bei Heizleistungen von 900 W und 1000 W eine Auslauftemperatur von 95$^o$ C erreicht wird.

E 82

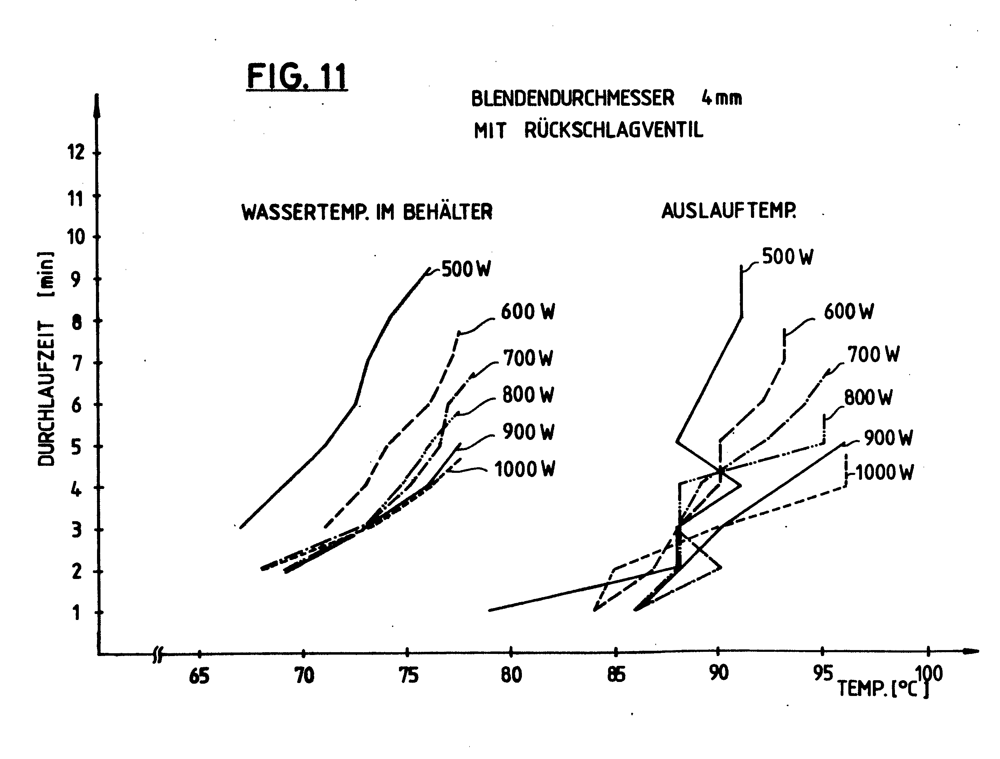

Wenn, wie in Fig. 11 dargestellt, der Durchmesser der Blende auf 4 mm erhöht wird, ist ein Rückschlagventil erforderlich. Die Kurven der Auslauftemperaturen zeigen, daß, abgesehen von den hohen Heizleistungen von 900 W und 1000 W, die Vorrichtung in eine diskontinuierliche Arbeitsweise mit starken Schwankungen der Auslauftemperatur übergeht.

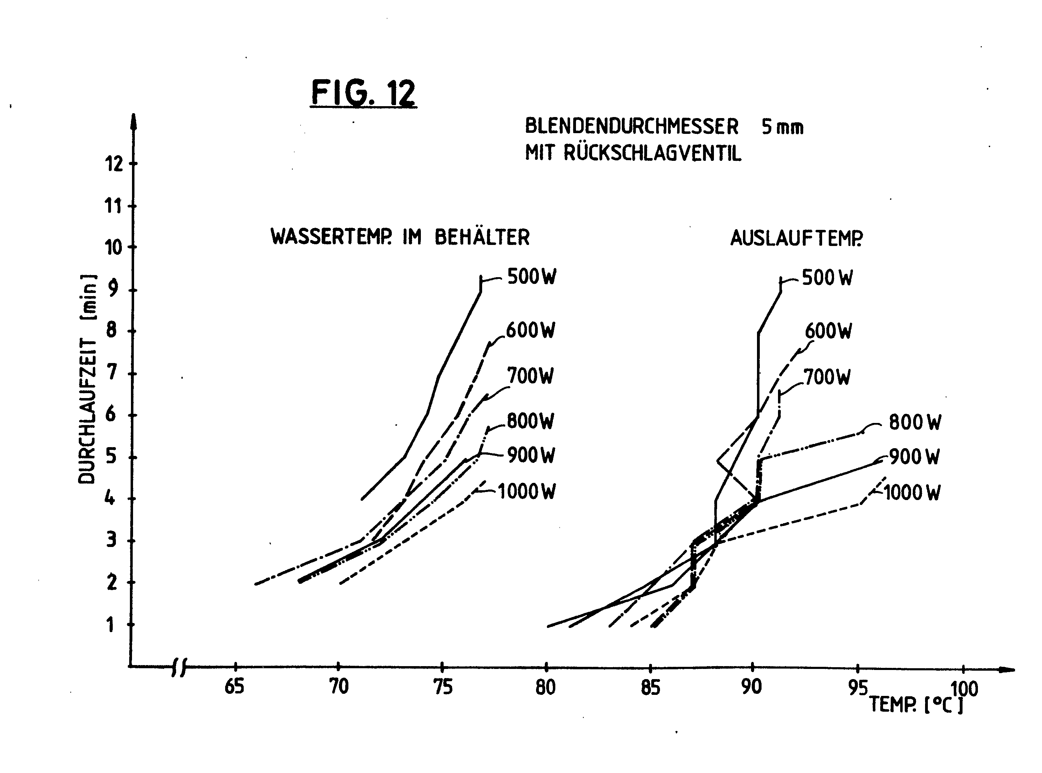

Ähnliches gilt bei Vergrößerung des Blendendurchmessers auf 5 mm, wie in Fig. 12 dargestellt.

Das Vergleichsdiagramm gemäß Fig. 13, bei dem dieselbe Vorrichtung ohne Drosseleinrichtung und mit Rückschlagventil betrieben wurde, zeigt die erheblichen Verbesserungen bei den bevorzugten Blendendurchmessern von 2,0 - 3,0 mm.

Es sei erwähnt, daß die Heizleistung bei Kaffeemaschinen im allgemeinen zwischen 600 und 700 W gewählt wird. Die extrem hohe Heizleistung von 1000 W und die extrem niedrige Heizleistung von 500 W wurde in den Diagrammen jeweils aufgezeigt, um das Verhalten in Grenzfällen zu demonstrieren.

Es können größere Blendendurchmesser gewählt werden, wenn zwei oder mehrere Blenden im Abstand voneinander angeordnet werden. Ebenso ergeben sich natürlich andere Werte, wenn anstelle von kreisrunden Blendenöffnungen schlitz- oder sternförmige Öffnungen gewählt werden. Wenn bei Verwendung von mehreren Blenden die Öffnungen nicht miteinander fluchten, dann können bestimmte Bewegungscharakteristiken des Wasserdurchlaufes erzwungen werden, z. B. eine Drehbewegung oder eine entsprechende Verwirbelung. Theoretisch könnte auch die Blende an der Auslaufseite des beheizten Wasserdurchlaufrohres angeordnet werden. Dies empfiehlt sich jedoch nicht wegen der

E 82

Verkalkungsgefahr.

Wenn der Wasserdurchlaufkanal aus mehreren Strängen besteht, dann kann wahlweise eine Serienschaltung oder Parallelschaltung dieser Stränge vorgesehen werden. Derartige Lösungen bieten sich beispielsweise an, wenn bei Verwendung von Strangpreßprofilen oder bei Druckgußkörpern neben einer den elektrischen Heizkörper aufnehmen Rille z. B. zwei den Wasserdurchlaufkanal bildende Rillen liegen.

Die optimale Größe der Blende ist weiterhin von der minimalen und der maximalen Höhendifferenz des Wasserpegels im Vorratsgefäß 9 und der Auslauföffnung des Steigrohres abhängig.

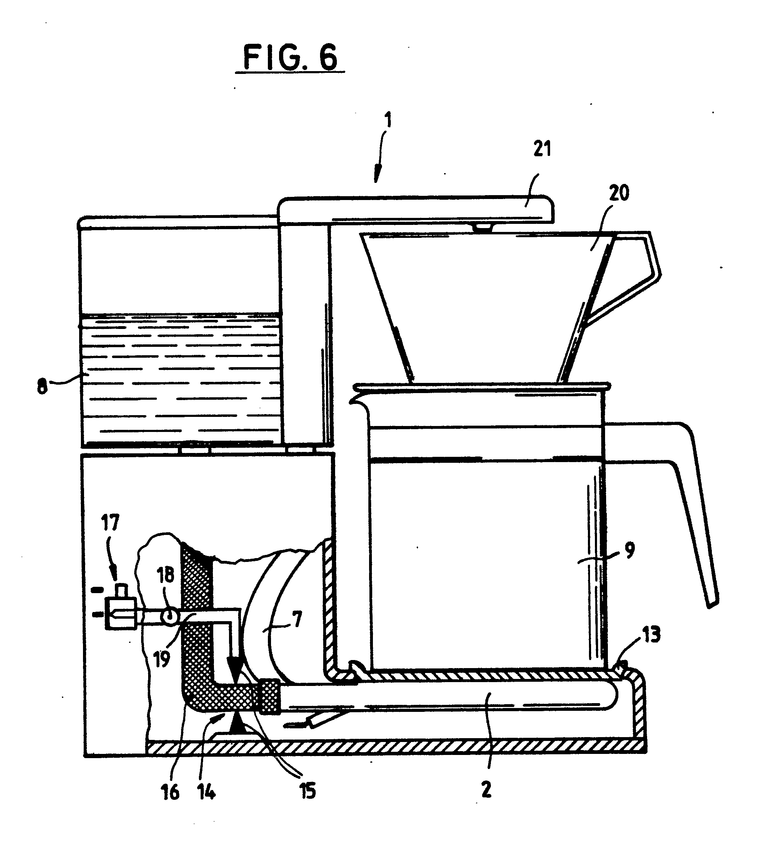

Die Blendenöffnung kann, wie beim Ausführungsbeispiel der Fig. 6 gezeigt ist, einstellbar oder regelbar sein. Wenn dies z. B. durch Quetschung eines elastischen Teiles 16 bewirkt wird, sollte jedoch darauf geachtet werden, daß die oben beschriebenen Charakteristiken erfüllt bleiben, d. h. der Kaltwasserstrom soll, wenn möglich, in das Zentrum der Wassersäule eingeführt werden.

Der elastische Teil 16 kann als Schlauch ausgebildet sein, der an die Einlaßseite des Wasserdurchlaufrohes 2 angeschlossen ist. Eine Klemmeinrichtung 15 dient zur Verengung der Durchflußöffnung des Schlauches, wodurch der Durchflußquerschnitt verändert wird. Mit Hilfe eines Knebelschalters 17 läßt sich über einen Schwenkhebel 19, der um den Punkt 18 schwenkbar ist, die Klemmeinrichtung 15 betätigen. In vorteilhafter Weise läßt sich dabei auch eine Aromawahl in Abhängigkeit von der gewünschten Geschmacksrichtung gewinnen.

Der Durchmesser der Blende kann theoretisch auch unter den Wert von 2 mm entsprechend Fig. 7 verringert werden, insbesondere bei kleineren Heizleistungen. Bei einer Heizleistung von 650 W ergibt sich dann der Vorteil, daß die Auslauftemperatur bereits nach der ersten Minute 95$^O$ C beträgt. Nach der vierten Minute wird der maximale Wert von 98$^O$ C erreicht. d. h. ein Wert, der bei einem Blendendurchmesser von 2 mm nur mit Heizleistungen über 800 W erreicht wurde. Für den Gesamtdurchlauf der Wassermenge werden jedoch dann über 10 Minuten benötigt. Zu beachten ist weiterhin, daß derartig kleine Blendendurchmesser kritisch sind.

Obwohl das Einsetzen einer Blende eine sehr preiswerte und einfache Maßnahme ist, kommen selbstverständlich auch andere Drosseleinrichtungen 14 in Betracht, z. B. engmaschige Siebe, Filtereinrichtungen, z. B. aus Kunststoffasern, welche auch auswechselbar angeordnet sein können.

Der Gesamtdurchmesser des Wasserrohres ist unkritisch. Bei der Versuchsanordnung hatte das Wasserdurchlaufrohr einen Durchmesser von 10 mm. Einbeulungen oder Verengungen des Durchmessers auf mehr als die Hälfte des Querschnittes haben sich meßtechnisch jedoch nicht ausgewirkt.

Entsprechende Versuche wurden mit verschiedenartigen Konstruktionen von Vorrichtungen der in Rede stehenden Art durchgeführt. Der Effekt erwies sich weitgehend unabhängig von der speziellen Konstruktion, d. h. unabhängig davon, aus welchen Materialien, z. B. Kupfer, Kupfer-Nickel-Legierungen oder Aluminium, das Wasserdurchlaufrohr und der Rohrheizkörper bestehen und in welcher Weise diese miteinander befestigt sind. Ebenfalls auch Vorrichtungen, bei denen entsprechende Durchflußkanäle für das Wasser und entsprechende Kanäle zum Einsetzen des Heizkörpers in Druckgußteilen vorgesehen sind, eignen sich für die Anwendung des Vorschlages gemäß der Erfindung.

E 82

0020807

Wenn die Drosseleinrichtung 14 als auswechselbares Filter ausgebildet wird, ergibt sich der Vorteil, daß Festkörper ausgefiltert werden. Diese können manchmal im Leitungswasser auftreten, z. B. durch Absprengung von Ablagerungen im Rohrsystem. Auch die Fehlbedienungen, z. B. wenn kalter Kaffee zur Aufwärmung in den Vorratsbehälter 9 eingefüllt wird, ergeben sich hier Vorteile. Das Filter kann gereinigt oder ausgewechselt werden.

E 82

- 1 -

Patentansprüche:

1. Vorrichtung zur Herstellung von Kaffee oder anderen Aufgußgetränken, bei der zwischen einem Wasservorratsbehälter und einem
elektrisch beheizten Wasserdurchlaufkanal eine Einrichtung vorgesehen ist, die den Wasserdurchfluß regelt und einen Dampfrückschlag
in den Wasservorratsbehälter verhindert, dadurch gekennzeichnet,
daß die den Wasserdurchfluß regelnde Einrichtung als Drossel ausgebildet ist, die den Querschnitt des durch sie fließenden Wasserstromes soweit verkleinert und die Durchflußgeschwindigkeit so
stark erhöht, daß eine über die gesamte Wasserdurchlaufperiode
im wesentlichen kontinuierliche Durchflußmenge pro Zeiteinheit
erzielt wird, und daß der Strömungsdruck in der Drossel höher
liegt als der zum Austrieb des Wassers aus einem Steigrohr benötigte Dampfdruck.

2. Vorrichtung nach Anspruch 1, dadurch gekennzeichnet,
daß die Drossel den Wasserdurchflußquerschnitt auf 2, 0 - 14 $mm^2$
beschränkt.

3. Vorrichtung nach Ansprüchen 1 und 2, dadurch gekennzeichnet,
daß der Wasserdurchflußquerschnitt der Drosseleinrichtung bei
einer Heizleistung von 500 - 1000 W  2 - 7 $mm^2$ beträgt.

E 82

4. Vorrichtung nach Ansprüchen 1 bis 3, dadurch gekennzeichnet, daß eine oder mehrere Drosseleinrichtungen am Ausfluß des Wasservorratsbehälters oder in dem Verbindungsstrang zwischen dem Wasservorratsbehälter und dem beheizten Wasserdurchlaufkanal oder innerhalb des beheizten Wasserdurchlaufkanals angeordnet sind.

5. Vorrichtung nach einem der Ansprüche 1 bis 4, dadurch gekennzeichnet, daß die Drosseleinrichtung aus Querschnittsverengungen aus Kerben, Ringnuten oder scheibenförmigen Blenden mit einer runden oder eckigen Öffnung besteht.

6. Vorrichtung nach Anspruch 5, dadurch gekennzeichnet, daß ein flexibler Verbindungsstrang zwischen dem Wasservorratsbehälter und dem beheizten Wasserdurchlaufkanal vorgesehen ist, dessen Durchmesser durch verstellbare Schlauchklemmen oder ähnliche Einrichtungen entsprechend verkleinert ist.

7. Vorrichtung nach einem der Ansprüche 1 bis 5, dadurch gekennzeichnet, daß bei einem horizontal liegenden Wasserdurchlaufkanal die Öffnung der Blende unterhalb der Mittelachse des Wasserdurchlaufkanals liegt.

8. Vorrichtung nach einem der Ansprüche 1 bis 7, dadurch gekennzeichnet, daß bei einem Doppelgerät, welches die gleichzeitige Herstellung von zwei Aufgußgetränken ermöglicht, die Blendenöffnungen und/oder die Heizleistungen zwischen den beiden Einheiten unterschiedlich

E 82

ausgelegt sind, so daß unterschiedliche Wasseraustrittstemperaturen und zum Durchfluß der Gesamtwassermenge benötigte unterschiedliche Zeitintervalle erzielt werden.

9. Vorrichtung nach einem der Ansprüche 1 bis 8, dadurch gekennzeichnet,
daß die Drosseleinrichtung aus einem Filter besteht.

E 82

- 1 -

Patentansprüche:

1. Vorrichtung zur Herstellung von Heißwasser für Kaffee oder andere Aufgußgetränke, bei der zwischen einem Wasservorratsbehälter und einem beheizten Wasserdurchlaufkanal eine Drossel vorgesehen ist, die den Wasserdurchfluß regelt, dadurch gekennzeichnet,

daß in an sich bekannter Weise die Wasseroberfläche des Wasservorratsbehälters (8) und der Auslauf (21) des Steigrohres (7) gegenüber der Umgebung offen sind, daß die den Wasserdurchfluß regelnde Einrichtung als Drossel (14) mit einem Wasserdurchflußquerschnitt von $2,0 - 14\ mm^2$ ausgebildet ist, die den Querschnitt des durch sie fließenden Wasserstromes soweit verkleinert und die Durchflußgeschwindigkeit so stark erhöht, daß eine über die gesamte Wasserdurchlaufperiode im wesentlichen kontinuierliche Durchflußmenge pro Zeiteinheit erzielt wird, und daß der Strömungsdruck in der Drossel höher liegt als der zum Austrieb des Wassers aus einem Steigrohr benötigte Dampfdruck.

2. Vorrichtung nach Anspruch 1, dadurch gekennzeichnet,

daß der Wasserdurchflußquerschnitt der Drossel bei einer Heizleistung von $500 - 1000\ W$ $2 - 7\ mm^2$ beträgt.

E 82

0020807

3. Vorrichtung nach einem der Ansprüche 1 und 2, dadurch gekennzeichnet,

daß die Drossel (7) von einer scheibenförmigen Blende (3) mit einer runden oder eckigen Öffnung gebildet wird.

4. Vorrichtung nach einem der Ansprüche 1 bis 3, dadurch gekennzeichnet,

daß bei einem horizontal liegenden Wasserdurchlaufkanal die Öffnung der Blende (3) unterhalb der Mittelachse des Wasserdurchlaufrohres (2) liegt.

5. Vorrichtung nach einem der Ansprüche 1 bis 4, dadurch gekennzeichnet,

daß bei einem Doppelgerät, welches die gleichzeitige Herstellung von zwei Aufgußgetränken ermöglicht, die Blendenöffnungen und/oder die Heizleistungen zwischen den beiden Einheiten unterschiedlich ausgelegt sind, so daß unterschiedliche Wasseraustrittstemperaturen und zum Durchfluß der Gesamtwassermenge benötigte unterschiedliche Zeitintervalle erzielt werden.

E 82

0020807

# FIG. 1

0020807

**FIG. 2**

10
2
12
11
13
14
3
4
6
5

**FIG. 4**

3
4

**FIG.3**

3
4

**FIG.5**

3
4

## FIG. 6

# FIG. 7

BLENDENDURCHMESSER   2mm
OHNE RÜCKSCHLAGVENTIL

WASSERTEMP. IM BEHÄLTER          AUSLAUF TEMP.

00208 07

4/10

# FIG. 8

BLENDENDURCHMESSER 2,5mm
OHNE RÜCKSCHLAGVENTIL

Axes: DURCHLAUFZEIT [min] (vertical, 0–12), TEMP. [°C] (horizontal, 65–100)

WASSERTEMP. IM BEHÄLTER
- 500 W
- 600 W
- 700 W
- 800 W
- 900 W
- 1000 W

AUSLAUFTEMP.
- 500W
- 600W
- 700W
- 800W
- 900W
- 1000W

# FIG. 9

BLENDENDURCHMESSER  3mm
OHNE RÜCKSCHLAGVENTIL

WASSERTEMP. IM BEHÄLTER

AUSLAUF TEMP.

DURCHLAUFZEIT [min]

TEMP. [°C]

# FIG. 10

BLENDENDURCHMESSER   3,5 mm
OHNE RÜCKSCHLAGVENTIL

WASSERTEMP. IM BEHÄLTER — 500 W, 600 W, 700 W, 800 W, 900 W, 1000 W

AUSLAUFTEMP. — 500 W, 600 W, 700 W, 800 W, 900 W, 1000 W

Y-Achse: DURCHLAUFZEIT [min]

X-Achse: TEMP. [°C]

FIG. 11

BLENDENDURCHMESSER 4 mm
MIT RÜCKSCHLAGVENTIL

WASSERTEMP. IM BEHÄLTER                    AUSLAUFTEMP.

500 W
600 W
700 W
800 W
900 W
1000 W

DURCHLAUFZEIT [min]

TEMP. [°C]

# FIG. 12

BLENDENDURCHMESSER 5 mm
MIT RÜCKSCHLAGVENTIL

WASSERTEMP. IM BEHÄLTER

AUSLAUFTEMP.

DURCHLAUFZEIT [min]

500W
600W
700W
800W
900W
1000W

TEMP. [°C]

# FIG. 13

ORGINALZUSTAND

**Europäisches Patentamt**

# EUROPÄISCHER RECHERCHENBERICHT

EP 79 10 2191

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | A 47 J 31/057 |
| X | <u>DE - A - 1 579 522</u> (SIEMENS)<br>* Insgesamt *<br><br>-- | 1,4,7,9 | |
| | <u>DE - A - 2 627 236</u> (BRAUN A.G.)<br>* Seite 8, Zeilen 1-3; Figur 1 *<br><br>---- | 1,6 | |

**RECHERCHIERTE SACHGEBIETE (Int. Cl. 3)**

A 47 J

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-03-1980 | SCHARTZ |

EPA form 1503.1   06.78